# EUROPEAN PATENT APPLICATION

(11) **EP 2 530 321 A1**
(43) Date of publication of application: **05.12.2012**
(21) Application number: 11737033.8
(22) Date of filing: 26.01.2011
(51) Int. Cl.: F04B 39/10, F04B 27/08, F16K 15/16

(54) **COMPRESSOR**

(30) Priority: 02.06.2010 JP 2010126462; 28.01.2010 JP 2010017090
(71) Applicant: Kabushiki Kaisha Toyota Jidoshokki, Kariya-shi, Aichi 448-8671 (JP)
(72) Inventor: OTA, Masaki, Kariya-shi Aichi 448-8671 (JP); MURASE, Masakazu, Kariya-shi Aichi 448-8671 (JP); KUBO, Hiroshi, Kariya-shi Aichi 448-8671 (JP); SATAKE, Noriaki, Kariya-shi Aichi 448-8671 (JP); KAWAGUCHI, Masahiro, Kariya-shi Aichi 448-8671 (JP)
(74) Representative: TBK
(86) International application number: PCT/JP2011/051461
(87) International publication number: WO 2011/093320

(57) **Abstract**

Disclosed is a compressor provided with a valve plate, a suction reed valve, and a seat surface. The valve plate has a suction port that communicates with a compression chamber and a suction chamber. The suction reed valve can open and close the suction port. The seat surface is formed on the valve plate, and is abutted with the suction reed valve when the suction reed valve closes the suction port. The seat surface is provided with a flat seal surface surrounding the suction port, and a groove surrounding the seal surface. The valve portion of the suction reed valve is provided with a flat sealing surface which is brought into close contact with the seal surface to close the suction port. The seat surface has a plurality of protrusions which space the seal surface from the sealing surface when the pressure of the compression chamber is identical to the pressure of the suction chamber. The protrusions are formed on the location excluding the seal surface.

## Description

### TECHNICAL FIELD

The present invention relates to a compressor.

### BACKGROUND ART

A typical compressor includes a partition wall arranged between a compression chamber and a suction chamber. A suction port extends through the partition wall thereby allowing for communication of the compression chamber and the suction chamber. A suction reed valve opens and closes the suction port. The partition wall includes a seating surface. The suction reed valve comes into contact with the seating surface when closing the suction port. The suction reed valve includes a fixed portion, which is fixed to the partition wall, a base portion, which extends from the fixed portion along the partition wall and is movable toward and away from the partition wall, and a valve portion, which extends from the base portion along the partition wall to open and close the suction port.

When the pressure of the compression chamber increases and becomes higher than the pressure of the suction chamber, the suction reed valve closes the suction port as the base portion and valve portion come into contact with the seating surface. When the pressure of the compression chamber becomes lower than the pressure of the suction chamber, the suction reed valve opens the suction port as the base portion and valve portion move away from the seating surface. However, in an actual compressor that uses refrigerant gas including lubrication oil, a valve opening resistance (e.g., adhesion force produced between the base portion and valve portion and the seating surface) acts on the suction reed valve. Thus, even when the pressure of the compression chamber decreases from the pressure of the suction chamber, a state in which the suction port does not readily open, that is, an opening delay of the suction reed valve, is apt to occur. This is one factor that causes suction pulsation.

For the same reason, suction pulsation also occurs in a compressor including a discharge port, which extends through a partition wall between a compression chamber and a discharge chamber, and a discharge reed valve, which opens and closes the discharge port.

To cope with this problem, in a compressor disclosed in patent document 1, either one of a seating surface and a contact surface of a suction reed valve (base portion and valve portion), which contacts the seat surface, is roughened. This decreases the valve opening resistance of the suction reed valve and reduces suction pulsation caused by the valve opening resistance.

Further, in a compressor disclosed in patent document 2, a seat member is arranged between a seating surface and a base portion of a suction reed valve. This decreases the valve opening resistance of the suction reed valve and reduces suction pulsation caused by the valve opening resistance.

In a compressor of patent document 3, a protrusion that projects toward a suction reed valve is arranged in a portion around a suction hole on a seating surface. This decreases the valve opening resistance of the suction reed valve and reduces suction pulsation caused by the valve opening resistance.

### PRIOR ART DOCUMENTS

### PATENT DOCUMENTS

Patent Document 1: Japanese Laid-Open Patent Publication No. 2000-54961
Patent Document 2: Japanese Patent No. 4395400
Patent Document 3: Japanese Laid-Open Patent Publication No. 2005-42695

### SUMMARY OF THE INVENTION

### PROBLEMS THAT ARE TO BE SOLVED BY THE INVENTION

However, in the compressors of documents 1 to 3, it is difficult to reduce pulsation while maintaining high compression efficiency and lowering costs.

More specifically, if either one of a seating surface and a contact surface of a suction reed valve (or discharge reed valve) is roughened to reduce pulsation, the roughened surface decreases the adhesiveness between the suction reed valve (or discharge reed valve) and the seating surface when the suction reed valve (or discharge reed valve) closes the suction port (or discharge port). Thus, sealing defects are apt to occur. In such a case, refrigerant gas is apt to leak from the compression chamber to the suction chamber (or from the discharge chamber to the compression chamber) thereby making it difficult to maintain a high compression efficiency.

Accordingly, as disclosed in paragraph 0027 of Japanese Patent No. 3326909, a suction or discharge reed valve may be formed to be curved beforehand in the direction in which the suction or discharge port opens. In this case, when the pressure of the compression chamber is in a state equal to the pressure of the suction chamber or in a state lower than the pressure of the discharge chamber, the reed valve easily moves back to a direction opening the port from a state closing the port. Thus, an opening delay subtly occurs in the reed valve, and pulsation can be reduced.

However, the compressor of Japanese Patent No. 3326909 also roughens the portion of the seating surface around the port. Thus, it is difficult to maintain high compression efficiency.

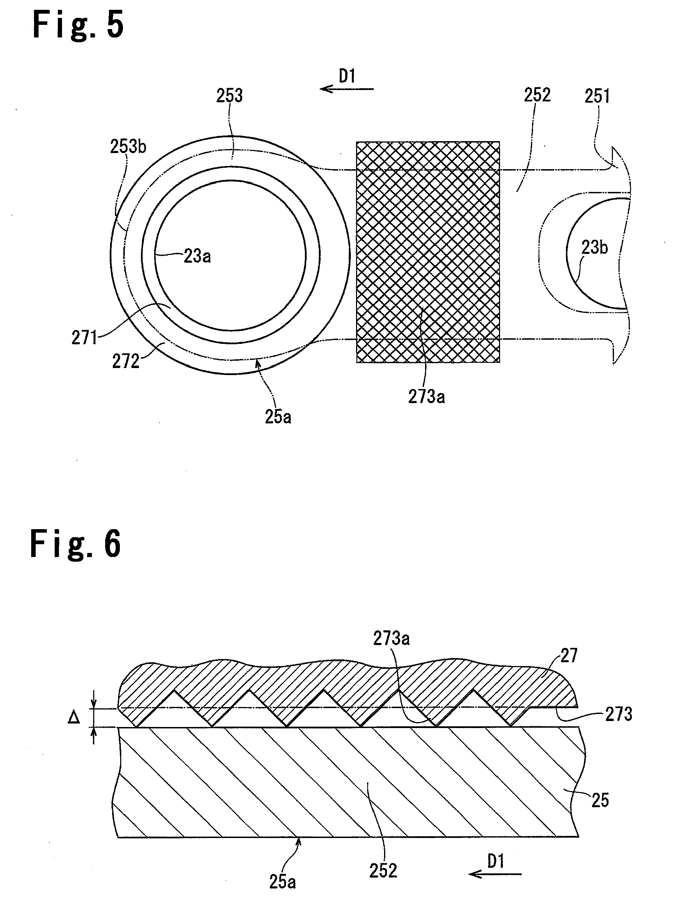

Further, when employing the seat member, which is discrete from the reed valve, like in document 2, the number of components increases. Thus, a rise in costs cannot be avoided. Further, in the structure shown in Fig. 5 of document 3, the reed suction valve opening and closing actions are performed using the protrusion as a fulcrum. In such a structure, stress concentrates at portions of contact between the protrusion and the reed valve.

It is an object of the present invention to provide a compressor that reduces pulsation and avoids the concentration of stress at a reed valve while maintaining high compression efficiency.

### MEANS FOR SOLVING THE PROBLEM

To achieve the above object, one aspect of the present invention provides a compressor including a partition wall, a reed valve, and a seating surface. The partition wall is arranged between a compression chamber and a suction chamber or discharge chamber. The partition wall includes a port that communicates the compression chamber to the suction chamber or the discharge chamber. The reed valve is flexible. The reed valve can open and close the port. The reed valve includes a fixed portion, which is fixed to the partition wall, a base portion, which extends from the fixed portion along the partition wall and is movable toward and away from the partition wall, and a valve portion, which extends from the base portion further along the partition wall and opens and closes the port. The seating surface is formed on the partition wall and comes into contact with the reed valve when the reed valve closes the port. The seating surface includes a flat seal surface, which surrounds the port, and a groove, which surrounds the seal surface. The valve portion includes a flat shutting surface that comes into close contact with the seal surface and closes the port. The seating surface or the reed valve includes a plurality of protrusions that separate the seal surface and the shutting surface when the pressure of the compression chamber is equal to the pressure of the suction chamber or the discharge chamber. The protrusions are formed at locations separated from the seal surface and the shutting surface.

In the compressor of the present invention, when the pressure of the compression chamber is equal to the pressure of the suction chamber or the discharge chamber, the protrusions separate the seal surface and the shutting surface. Thus, if the port is a suction port, the reed valve easily opens the suction port when the pressure of the compression chamber becomes lower than the pressure of the suction chamber. As a result, an opening delay subtly of the reed valve subtly occurs, and suction pulsation can be reduced. If the port is a discharge port, due to the same effect, the reed valve easily opens the discharge port and discharge pulsation can be reduced. A case in which the pressure of the compression chamber becomes equal to the pressure of the suction chamber and a case in which the pressure of the compression chamber becomes equal to the pressure of the discharge chamber refers to a state in which there is no pressure difference between the compression chamber and the suction chamber or a state in which there is no pressure difference between the compression chamber and the discharge chamber when the compressor is operating and a state in which a pressure difference between the compression chamber and the suction chamber is eliminated or a state in which a pressure difference between the compression chamber and the discharge chamber is eliminated when the compressor stops operating.

Further, if the port is a suction port, when the pressure of the compression chamber becomes higher than the pressure of the suction chamber in the compressor, the reed valve closes the suction port as the shutting surface of the valve portion comes into close contact with the seal surface of the seating surface. On the other hand, if the port is a discharge port, when the pressure of the compression chamber becomes lower than the pressure of the discharge chamber, the reed valve closes the discharge port as the shutting surface of the valve portion comes into close contact with the seal surface of the seating surface, due to the same operation. The shutting surface and the seal surface are not roughened. This ensures that the port is closed when the shutting surface comes into close contact with the seal surface. Thus, the compressor can maintain high compression efficiency and realize a high cooling capability

Additionally, the plurality of protrusions obtains a gap between the reed valve and the seating surface when the reed valve moves away from the seating surface. Thus, the reed valve and seating surface do not come into close contact, and an adhesion force does not act between the reed valve and the seating surface. As a result, an opening delay of the reed valve subtly occurs, sudden changes in the valve open amount of the port and vibration of the reed valve are reduced. In this manner, the compressor reduces suction pulsation and consequently improves the quietness.

Moreover, in comparison with patent document 3, the plurality of protrusions supports the valve body. Accordingly, concentrated stress is reduced at a location where the valve body is supported compared to patent document 3 that supports the valve body with a single protrusion.

In this manner, the compressor according to the present invention reduces pulsation and avoids the concentration of stress at a valve body while maintaining high compression efficiency.

Preferably, the protrusions are formed continuously with a rim of the groove on the seating surface.

The protrusions are formed continuously with the rim of the groove. Thus, in comparison with patent document 3, it becomes difficult for an oil film to form between the periphery of the rim of the groove and the reed valve. The protrusions, which are formed continuously with the groove and the rim of the groove, act to easily break an oil film.

Preferably, the protrusions are formed in a region facing the base portion on the seating surface.

Preferably, the protrusions are formed in at least a region facing a rim of the groove on the reed valve.

The protrusions are formed in at least a region facing a rim of the groove on the reed valve. Thus, in comparison with patent document 3, it becomes difficult for an oil film to form between the periphery of the rim of the groove and the reed valve. The groove and the protrusions, which are formed at a location facing the rim of the groove, act to easily break an oil film.

Preferably, the protrusions are formed on the base portion.

Preferably, the protrusions are formed through any one of a knurling process, a blasting process, and a laser process.

Any one of a knurling process, a blasting process, and a laser process ensures that a gap having small variations is obtained between the reed valve and the seating surface. Further, the plurality of protrusions can be easily formed by any one of the knurling process, blasting process, and laser process. Thus, the compressor suppresses rises in manufacturing cost.

### BRIEF DESCRIPTION OF THE DRAWINGS

Fig. 1 is a vertical cross-sectional view of a compressor according to a first embodiment of the present invention.
Fig. 2 is an enlarged cross-sectional view showing the compressor of Fig. 1 in a state in which a suction reed valve opens a suction port.
Fig. 3 is a plan view of the compressor of Fig. 1 showing a valve plate and a suction valve plate, which includes a plurality of suction reed valves.
Fig. 4 is an enlarged cross-sectional view showing the compressor of Fig. 1 in a state in which the suction reed valve closes the suction port.
Fig. 5 is an enlarged plan view of the compressor of Fig. 1 showing a suction reed valve and a suction port from the direction of arrow V in Fig. 4.
Fig. 6 is an enlarged cross-sectional view of the compressor of Fig. 1 showing protrusions, which are formed on a reference surface, and a base portion of the suction reed valve.
Fig. 7 is an enlarged cross-sectional view of a compressor according to a second embodiment of the present invention showing a state in which a discharge reed valve opens a discharge port.
Fig. 8 is a plan view of the compressor of Fig. 7 showing a valve plate and a discharge valve plate, which includes a plurality of discharge reed valves.
Fig. 9 is an enlarged cross-sectional view of the compressor of the second embodiment showing a state in which the discharge reed valve closes the discharge port.
Fig. 10 is an enlarged plan view of the compressor of the second embodiment showing a discharge reed valve and a discharge port from the direction of arrow V in Fig. 9.
Fig. 11 is an enlarged cross-sectional view of the compressor of the second embodiment showing a state in which the discharge reed valve slightly opens the discharge port.
Fig. 12 is an enlarged cross-sectional view of the compressor of the second embodiment showing a state in which the discharge reed valve opens the discharge port by a small amount.
Fig. 13 is an enlarged cross-sectional view of the compressor of the second embodiment showing a state in which the discharge reed valve opens the discharge port by a large amount.
Fig. 14 is a graph showing the relationship of time and the pressure of the compression chamber in the compressor of the second embodiment.
Fig. 15 is an enlarged view of Fig. 14.
Fig. 16 is an enlarged cross-sectional view of a compressor according to a third embodiment showing a state in which a suction reed valve closes a suction port.
Fig. 17 is an enlarged plan view of the compressor of the third embodiment showing the suction reed valve, the suction port, and a discharge port.
Fig. 18 is an enlarged plan view of a compressor according to a fourth embodiment showing a suction reed valve, a suction port, and a discharge port.
Fig. 19 is an enlarged cross-sectional view of a compressor according to a fifth embodiment showing a state in which a reed valve opens a port.
Fig. 20 is an enlarged cross-sectional view of a compressor according to a sixth embodiment showing a state in which a suction reed valve closes a suction port.

### EMBODIMENTS OF THE INVENTION

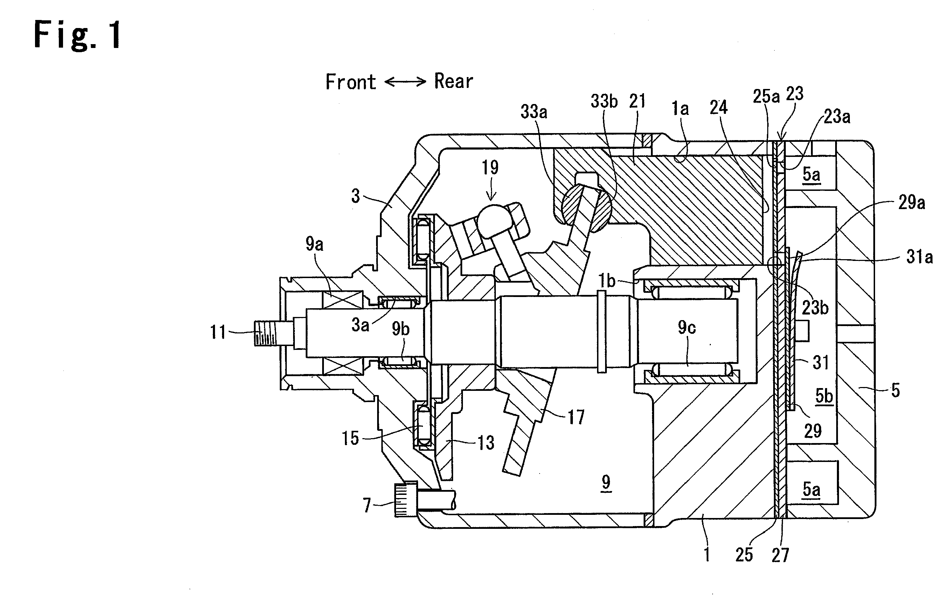

First to sixth embodiments of the present invention will now be described with reference to the drawings. The compressors of the first to sixth embodiments are variable displacement swash plate type compressors. Fig. 1 shows the front to rear direction of a compressor in which the left side defines the front side of the compressor and the right side defines the rear side of the compressor. Further, the front to rear directions in the drawings all correspond to Fig. 1.

### First Embodiment

Referring to Fig. 1, a housing of the compressor in the first embodiment includes a cylinder block 1, a front housing member 3, which is joined with the front end of the cylinder block 1, and a rear housing member 5, which is joined with the rear end of the cylinder block 1 with a valve unit 23 arranged in between. A plurality of bolts 7 fasten the cylinder block 1, the front housing member 3, and the rear housing member 5 to one another. The cylinder block 1 includes a plurality of cylinder bores 1a. The cylinder bores 1a are arranged at equal angular intervals along the same circle and extend parallel to one another along the axis of the cylinder block 1. The cylinder block 1 and the front housing member 3 form a crank chamber 9. The rear housing member 5 includes a suction chamber 5a, which is located at an outer part in the radial direction, and a discharge chamber 5b, which is located at a central part in the radial direction.

The front housing member 3 includes a shaft hole 3a, and the cylinder block 1 includes a shaft hole 1 b. A drive shaft 11 is inserted in the shaft holes 3a and 1 b. The drive shaft 11 is rotatably supported by radial bearing 9b and 9c in the front housing member 3 and the cylinder block 1. A pulley or electromagnetic clutch (not shown) is arranged on the drive shaft 11. A belt (not shown), which is driven by an engine or motor of a vehicle engine, runs over the pulley or a pulley of the electromagnetic clutch.

A lug plate 13 is fixed to a drive shaft 11 in the crank chamber 9. A thrust bearing 15 is arranged between the lug plate 13 and the front housing member 3. The drive shaft 11 extends through a swash plate 17 and supports the swash plate 17. A link mechanism 19 couples the swash plate 17 to the lug plate 13 so that the swash plate 17 is inclinable relative to the lug plate 13.

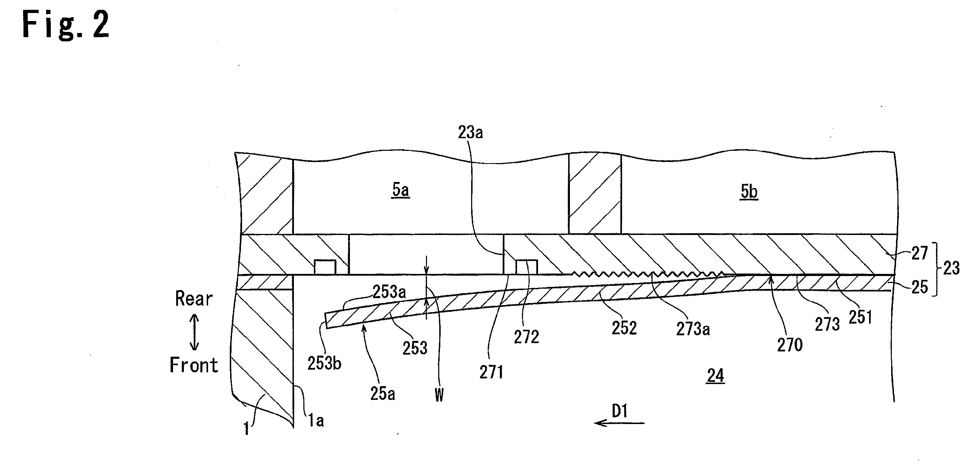

A piston 21 is accommodated in each cylinder bore 1a and movable in a reciprocating manner. As shown in Fig. 2, the valve unit 23 includes a suction valve plate 25 and a valve plate 27, which contacts the suction valve plate 25. The valve plate 27 is one example of a partition wall of the present invention.

As shown in Fig. 1, front and rear shoes 33a and 33b are arranged between the swash plate 17 and each piston 21. Each pair of shoes 33a and 33b convert the rotating motion of the swash plate 17 to the reciprocating motion of the piston 21.

Although not shown in the drawings, a bleeding passage connects the crank chamber 9 and the suction chamber 5a, and a gas supplying passage connects the crank chamber 9 and the discharge chamber 5b. A displacement control valve is arranged in the gas supplying passage. The displacement control valve changes the open amount of the gas supplying passage in accordance with the suction pressure. Further, although not shown in the drawings, the discharge chamber 5b is connected by a pipe to a condenser. The condenser is connected by a pipe via an expansion valve to an evaporator. The evaporator is connected by a pipe to the suction chamber 5a of the compressor. The cylinder bores 1a, the pistons 21, and the valve unit 23 form compression chambers 24.

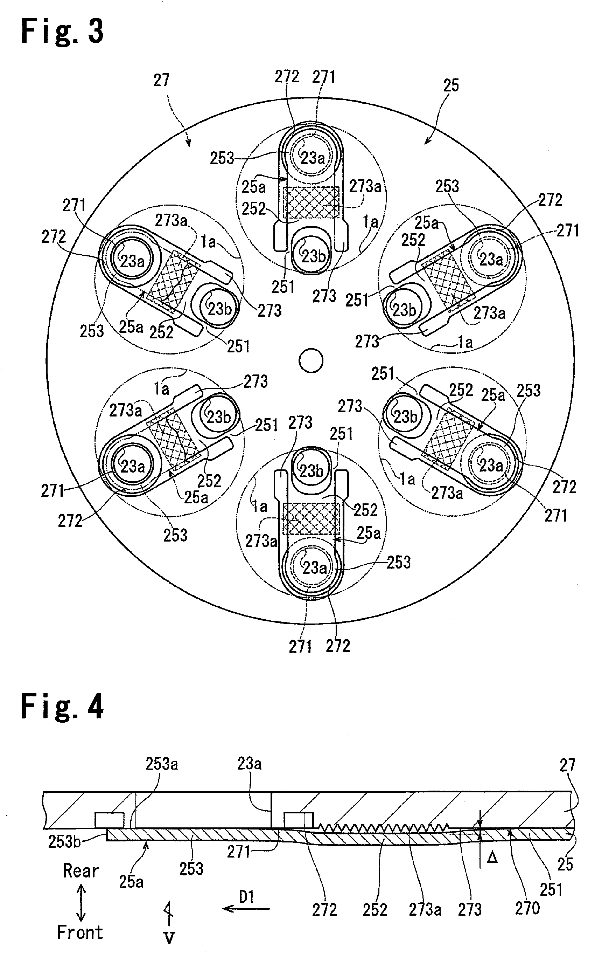

As shown in Figs. 2 and 3, the valve plate 27 includes suction ports 23a that communicate the suction chamber 5a and the compression chambers 24. The suction valve plate 25 includes suction reed valves 25a that open and close the suction ports 23a. Referring to Fig. 3, in the present embodiment, the suction valve plate 25 is formed by an elastically deformable circular thin plate. In Fig. 3, the front of the plane of the drawing corresponds to the front side of the compressor, and the rear of the plane of the drawing corresponds to the rear side of the compressor. The cylinder bores 1a are located toward the front of the plane of the drawing from the suction valve plate 25 and shown by the double-dashed lines. Parts of the circular thin plate are cut out to form a plurality of elongated extended portions in the suction valve plate 25 that extend radially outward in the radial direction from the center. Each extended portion forms a suction reed valve 25a that closes the suction port 23a.

Referring to Figs. 3 to 5, the suction port 23a is circular when viewed from above. The surface of the valve plate 27 facing the compression chambers 24, that is, the surface facing the suction valve plate 25A, defines a seating surface 270. The seating surface 270 includes annular grooves 272 entirely surrounding the suction ports 23a, that is, entirely surrounding opening edges. In the seating surface 270, annular regions arranged between the suction ports 23a and the grooves 272 define flat seal surfaces 271 (also referred to as eyeglass portions). The seating surface 270 comes into contact with the suction reed valves 25a when the suction reed valves 25a close.

Referring to Figs. 2 and 4, in the seating surface 270, the region sandwiching the grooves 272 with the suction ports 23a defines a reference surface 273, which is flush with the seal surfaces 271.

As shown in Figs. 2 to 5, each suction reed valve 25a includes a fixed portion 251, which is fixed to the reference surface 273, a base portion 252, which extends from the fixed portion 251 in a first direction D1 and is movable toward and away from the reference surface 273, and a valve portion 253, which extends from the base portion 252 in the first direction D1 to open and close the suction port 23a. As shown in Fig. 4, in the valve portion 253, the surface that comes into close contact with the seal surface 271 defines a flat shutting surface 253a. In the present embodiment, the first direction D1 is parallel to the seating surface 270 and extends outward in the radial direction of the drive shaft 11.

Referring to Fig. 5, when viewing the base portion 252 and the valve portion 253 from above, the base portion 252 is rectangular and elongated in the first direction D1. A rim 253b of the valve portion 253 is arcuate and concentric with the suction port 23a and the groove 272. The rim 253b has a diameter that is slightly larger than a length of a short side of the base portion 252, larger than that of the seal surface 271 and smaller than that of the outermost contour of the groove 272. That is, the rim 253b is arranged at a position corresponding to the groove 272.

Referring to Figs. 2 to 5, the reference surface 273, specifically, the regions of the reference surface 273 facing the base portions 252, includes a plurality of protrusions 273a, which protrude toward the compression chambers 24. The protrusions 273a are formed in a region separated from the seal surface 271. Referring to Figs. 5 and 6, in the present embodiment, a knurling process is performed to form the protrusions 273a. This forms fine ridges, which project from the reference surface 273, and fine valleys, which are recessed in the reference surface 273, in a grid-shaped manner.

The protrusions 273a extend from the two sides of the base portion 252 over a wider area than the base portion 252. Further, the protrusions extend in the first direction D1 to the vicinity of the groove 272. Preferably, the height difference Δ between the reference surface 273 and the fine ridges is in the range of ten micrometers to several tens of micrometers although this depends on the compressor size of the compressor or the reed valve size.

Referring to Fig. 1, a discharge valve plate 29 and a retainer plate 31 are fixed to the valve plate 27. Discharge ports 23b are formed in the suction valve plate 25 and the valve plate 27 to communicate the discharge chamber 5b and the compression chambers 24. The discharge valve plate 29 includes discharge reed valves 29a, which open and close the discharge ports 23b. The retainer plate 31 includes a retainer 31 a that restricts the lift length (open amount) of the discharge reed valves 29a.

In the compressor formed as described above, the drive shaft 11 is rotated and driven so that the lug plate 13 and swash plate 17 rotate integrally with the drive shaft 11 and reciprocate each piston 21 in the corresponding cylinder bore 1a with a stroke that is in accordance with the inclination angle of the swash plate 17. As a result, refrigerant is drawn from the suction chamber 5a into each compression chamber 24 and discharged into the discharge chamber 5b. Atomized lubrication oil is suspended in the refrigerant compressed by the compressor. The lubrication oil collects on and thereby suppresses wear of moving components such as the pistons 21, the shoes 33a and 33b, and the swash plate 17. The lubrication oil also collects on the surfaces of the seating surface 270, the suction reed valves 25a, and the discharge reed valves 29a and in the grooves 272.

In this state, when the pressure of the compression chamber 24 is equal to or lower than the pressure of the suction chamber 5a, each protrusion 273a separates the base portion 252 from the reference surface 273 as shown in Fig. 2. The base portion 252 is part of the suction valve plate 25, which is formed by an elastically deformable circular thin plate as described above. Thus, in the base portion 252, the part near the fixed portion 251 is in close contact with the reference surface 273. However, other parts of the base portion 252 are lifted by the protrusions 273a and extend in the first direction D1 so as to form a gap W with the reference surface 273. Thus, close contact between the base portion 252 and the reference surface 273 is avoided making it difficult for an adhesion force to act between the base portion 252 and the reference surface 273. This separates the seal surface 271 and the shutting surface 253a. As a result, the suction reed valve 25a readily opens when the pressure of the compression chamber 24 becomes lower than the pressure of the suction chamber 5a. Thus, an opening delay of the suction reed valve 25a subtly occurs, sudden opening of the suction reed valve 25a at a delayed timing is suppressed, and vibration of the suction reed valve 25a is reduced. In this manner, the compressor reduces suction pulsation and consequently improves quietness.

When the pressure of the compression chamber 24 increases and becomes higher than the pressure of the suction chamber 5a, the base portion 252 moves toward the reference surface 273 as shown in Fig. 4. More specifically, the base portion 252 curves along the protrusions 273a and extends in the first direction D1, while maintaining the height difference Δ from the reference surface 273. As the protrusions 273a terminate in the vicinity of the groove 272, the base portion 252 is elastically deformed and curved back to the reference surface 273 so that the shutting surface 253a of the valve portion 253 comes into close contact with the seal surface 271. The shutting surface 253a and the seal surface 271 are flat and not roughened. This ensures that the shutting surface 253a comes into close contact with the seal surface 271 and ensures that the suction port 23a is closed. Further, the lubrication oil suspended in the refrigerant gas remains in the groove 272, and the rim 253b of the valve portion 253 is arranged at a position corresponding to the groove 272. Thus, when the valve portion 253 closes the suction port 23a, the lubrication oil in the groove 272 contacts the rim 253b of the valve portion 253 thereby ensuring that the space between the shutting surface 253a and the seal surface 271 is sealed. As a result, the compressor, as compared with the compressor of patent document 1, maintains high compression efficiency and realizes a high cooling capability.

Further, in the compressor of the present embodiment, the protrusion 273a is arranged integrally with the seating surface 273. Since the number of components does not increase, there is no increase in costs.

Additionally, in the compressor of the present embodiment, when the suction reed valve 25a closes the suction port 23a, the lubrication oil collected in the groove 272 ensures that the space between the seal surface 271 and the shutting surface 253a is sealed. This improves the compression efficiency.

Moreover, in the compressor of the present embodiment, a knurling process is performed to ensure that the height difference Δ between the base portion 252 and the seating surface 270 is obtained with small variations. Further, the protrusions 273a are easy to form and thereby suppress rises in the manufacturing cost.

When the sealing of the space between the shutting surface 253a and the seal surface 271 with the lubrication oil in the groove 272 becomes too strong, an opening delay of the valve portion 253 is apt to occur. It is thus preferable that the area of contact between the rim 253b of the valve portion 253 and the lubrication oil in the groove 272 be optimized by properly setting the width of the groove 272 or the extended amount of the rim 253b from the seal surface 271.

Further, the structure that supports the suction reed valves 25a with the plurality of protrusions 273a reduces concentrated stress at the location where the suction reed valve 25a is supported in comparison with a structure that supports the suction reed valve with a single protrusion.

Thus, in the compressor of the present embodiment, pulsation can be reduced while maintaining high compression efficiency. Further, costs may be lowered, and stress concentration at the suction reed valves 25a can be reduced.

### Second Embodiment

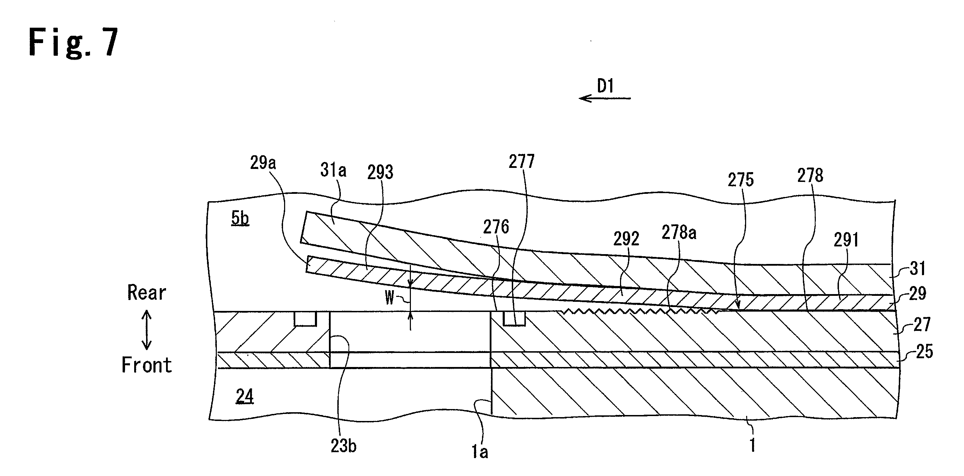

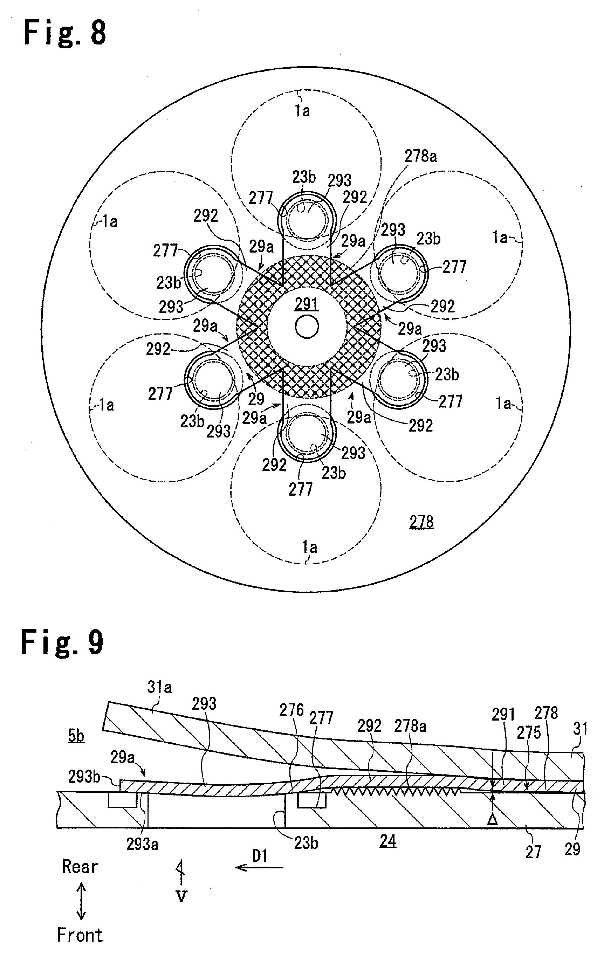

Figs. 7 and 8 illustrate main parts of a compressor according to a second embodiment of the present invention.

As shown in Figs. 7 and 8, the discharge ports 23b are formed in the suction valve plate 25 and the valve plate 27 to communicate the discharge chamber 5b and the compression chambers 24. The discharge valve plate 29 includes the discharge reed valves 29a, which open and close the discharge ports 23b. In the present embodiment, referring to Fig. 8, the discharge valve plate 29 is formed from an elastically deformable thin plate, and the discharge reed valves 29a extend radially.

Referring to Figs. 8 to 10, the discharge port 23b is circular when viewed from above. The surface of the valve plate 27 facing the discharge chamber 5b, that is, the surface facing the discharge valve plate 29, defines a seating surface 275. The seating surface 275 includes annular grooves 277 entirely surrounding the discharge ports 23b, that is, entirely surrounding opening edges. In the seating surface 275, annular regions arranged between the discharge ports 23b and the grooves 277 define flat seal surfaces 276 (also referred to as eyeglass portions).

Referring to Figs. 7 and 9, in the seating surface 275, the region sandwiching the grooves 277 with the discharge ports 23b defines a reference surface 278, which is flush with the seal surfaces 276.

As shown in Figs. 7 to 10, each discharge reed valve 29a includes a fixed portion 291, which is fixed to the reference surface 278, a base portion 292, which extends from the fixed portion 291 in a first direction D1 and is movable toward and away from the reference surface 278, and a valve portion 293, which extends from the base portion 292 in the first direction D1 to open and close the discharge port 23b. As shown in Fig. 9, in the valve portion 293, the surface that comes into close contact with the seal surface 276 defines a flat shutting surface 293a. In the present embodiment, the first direction D1 is parallel to the seating surface 275 and extends outward in the radial direction of the drive shaft 11.

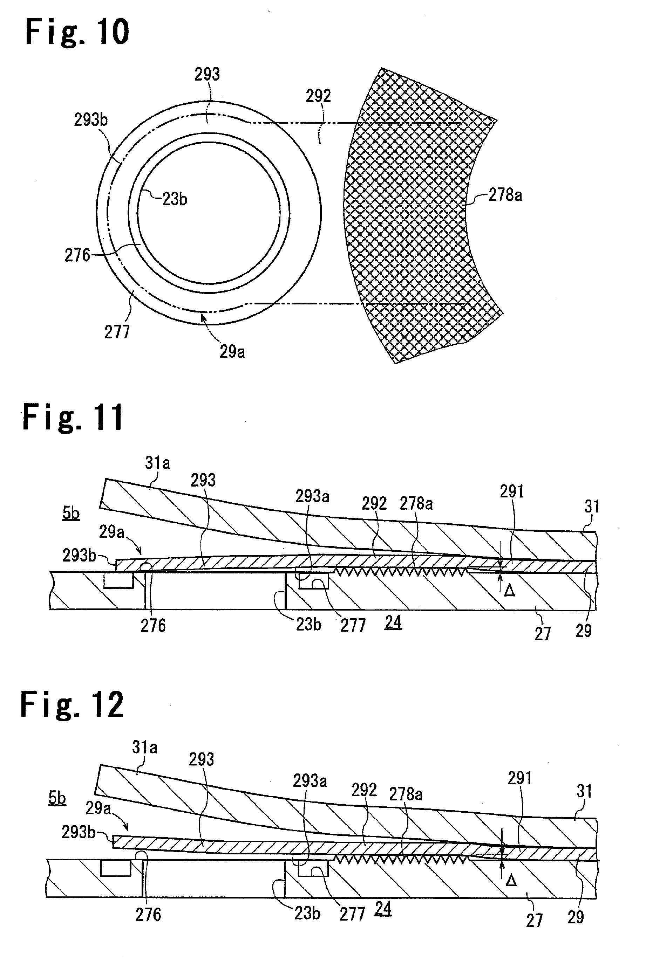

Referring to Fig. 10, when viewing the base portion 292 and the valve portion 293 from above, the base portion 292 is rectangular and elongated in the first direction D1. A rim 293b of the valve portion 293 is arcuate and concentric with the discharge port 23b and the groove 277. The rim 293b has a diameter that is slightly larger than a length of a short side of the base portion 292, larger than that of the seal surface 276 and smaller than that of the outermost contour of the groove 277. That is, the rim 293b is arranged at a position corresponding to the groove 277.

Referring to Figs. 7 to 10, the reference surface 278, specifically, the region of the reference surface 278 facing the base portion 292 includes a plurality of protrusions 278a, which protrude toward the discharge chamber 5b. The protrusions 278a are similar to the protrusions 273a shown in Fig. 6. The protrusions 278a are formed in a region separated from the seal surfaces 276. The remaining structure is the same as the first embodiment.

The compressor of the present embodiment has the advantages described below.

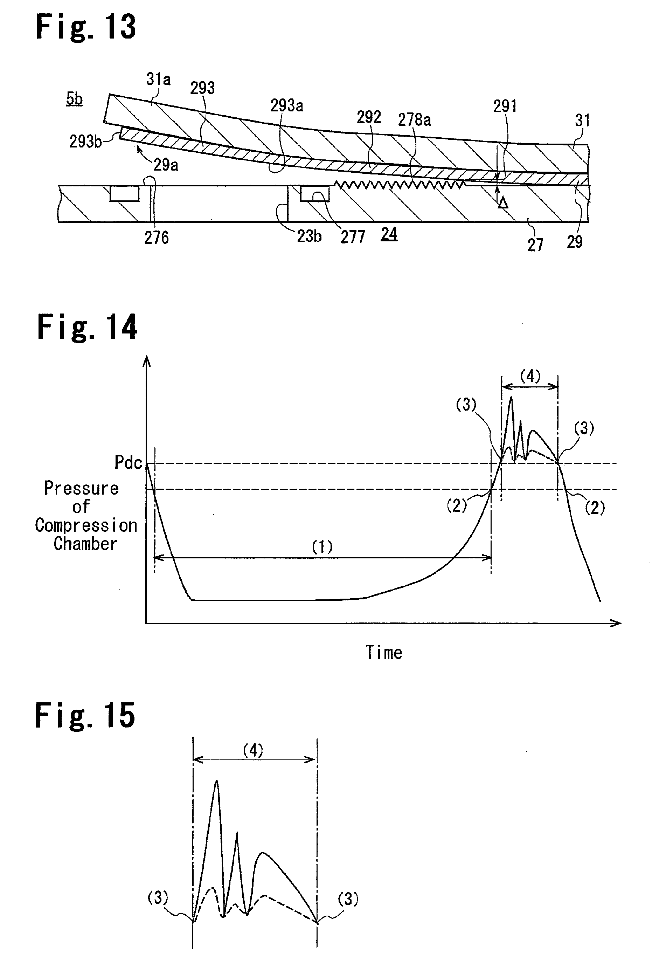

In Fig. 14, (1) denotes a period during which the compression is performing a suction stroke or a compression stroke. During period (1), the pressure of the discharge chamber 5b is higher than the pressure of the compression chamber 24. Thus, as shown in Fig. 9, the valve portion 293 of the discharge reed valve 29a closes the discharge port 23b and is elastically deformed slightly. In this state, the shutting surface 293a is in close contact with the seal surface 276, and a reverse flow of refrigerant gas from the discharge chamber 5b to the compression chamber 24 is not produced.

Then, at the timing denoted by (2) in Fig. 14, when the pressure of the compression chamber 24 rises and approaches a set pressure Pdc, the pressure acting on the valve portion 293 of the discharge reed valve 29a changes and the valve portion 293 is slightly restored from the elastically deformed state of Fig. 9 by the protrusions 278a, as shown in Fig. 11. In other words, the adhesion caused by lubrication oil is slightly resolved. In this state, part of the shutting surface 293a is slightly separated from the seal surface 276 thereby slightly opening the discharge port 23b.

At the timing denoted by (3) in Fig. 14, when the pressure of the compression chamber 24 reaches the set pressure Pdc, the valve portion 293 is completely restored by the protrusion 278a, as shown in Fig. 12. In other words, the adhesion caused by lubrication oil is completely resolved. In this state, the entire shutting surface 293a is separated from the seal surface 276 thereby opening the discharge port 23b by a small amount.

When the compressor is performing a discharge stroke at the period denoted by (4) in Fig. 14, the valve portion 293 opens the discharge port 23b by a greater amount in a state restricted by the retainer 31 a.

Fig. 15 is an enlarged diagram showing part of Fig. 1, specifically, changes in the pressure of the compression chamber 24 during the discharge stroke. In Fig. 15, the solid line indicates pressure changes in a compressor that does not include the protrusions 273a, and the broken line indicates pressure changes in the compressor of the second embodiment. As apparent from Fig. 15, the compressor of the second embodiment can reduce discharge pulsation, while maintaining high compression efficiency. Further, the compressor can lower costs and reduce stress concentration at the discharge reed valves 29a. Other advantages are the same as the first embodiment.

### Third Embodiment

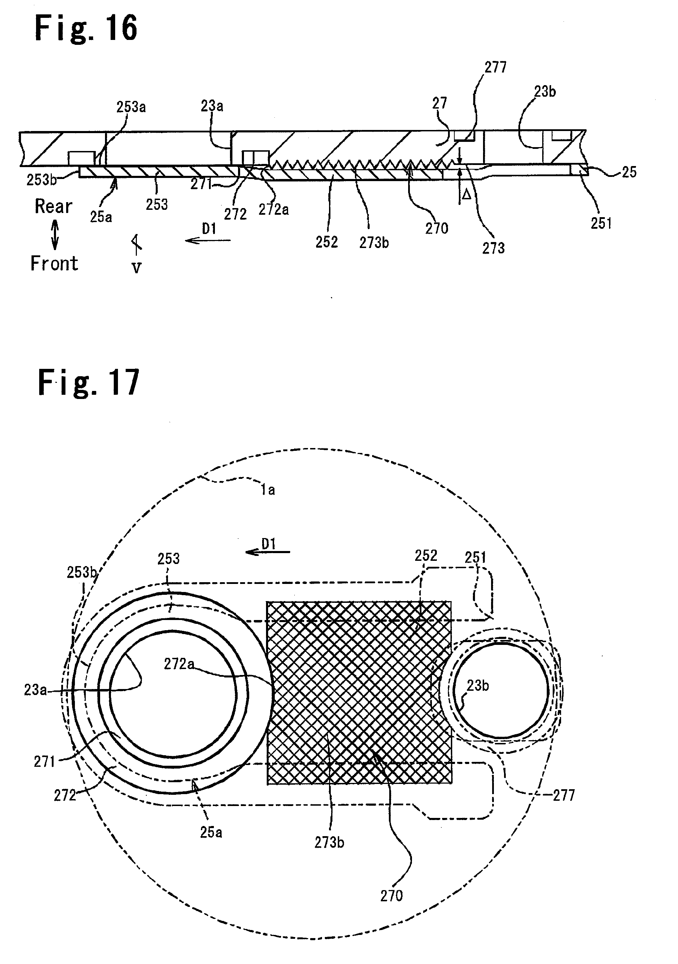

Referring to Figs. 16 and 17, in a compressor of a third embodiment, a formation range of the plurality of protrusions 273a is changed from the first embodiment. More specifically, a plurality of protrusions 273b in the third embodiment are formed continuously in a region extending from the vicinity of the discharge port 23b to a rim 272a of the groove 272 on the reference surface 273 in the first direction D1. The protrusions 273b are continuous with the rim 272a of the groove 272.

The surface of the valve plate 27 facing the discharge chamber 5b, that is, the surface facing the discharge valve plate 29, defines the seating surface 275. The seating surface 275 includes annular grooves 277 entirely surrounding the discharge ports 23b, that is, entirely surrounding opening edges. As shown in Fig. 17, the protrusions 273b are separated from the region of the reference surface 273 located at the opposite side of the grooves 277. In the same manner as the protrusions 272a of the first embodiment, the protrusions 273b extend from the two sides of the base portion 252 over a wider area than the base portions 252. The remaining structure is the same as the compressor of the first embodiment. Thus, same reference characters are given to those components that are the same as the corresponding components of the compressor in the first embodiment. Such components are not described in detail.

In the same manner as the compressor of the first embodiment, the base portion 252 elastically deforms along the protrusion 273b. This ensures that the height difference Δ is obtained between the base portion 252 and the reference surface 273.

In the compressor of the present embodiment, the protrusions 273b are formed continuously in the region extending from the vicinity of the discharge port 23b to the rim 272a of the groove 272 on the reference surface 273. This makes it difficult for an oil film to form between part of the periphery of the rim 272a of the groove 272 and the suction reed valve 25a. An oil film is apt to being broken by the protrusions 273b formed continuously with the groove 272 and the rim 272a of groove 272. Thus, in comparison with the compressor of the first embodiment, in the compressor of the present embodiment, it is further difficult for an adhesion force to act between the suction reed valve 25a and the seating surface 270. As a result, an opening delay of the suction reed valve 25a subtly occurs. Further, sudden changes in the open amount of the suction reed valve 25a and vibration of the suction reed valve 25a are reduced. In this manner, the compressor of the present embodiment maintains high compression efficiency and, consequently, realizes a high cooling capability.

Further, in the compressor of the present embodiment, the protrusions 273b are separated from the region of the reference surface 273 located at the opposite side of the grooves 277, which are formed around the discharge ports 23b. At a location where the groove 277 is formed, the rigidity of the valve plate 27 is lower than the surrounding of the groove 277. Accordingly, when the protrusions 273b are formed in the valve plate 27, deformation is suppressed around the discharge ports 23b. Other advantages are the same as the first embodiment.

### Fourth Embodiment

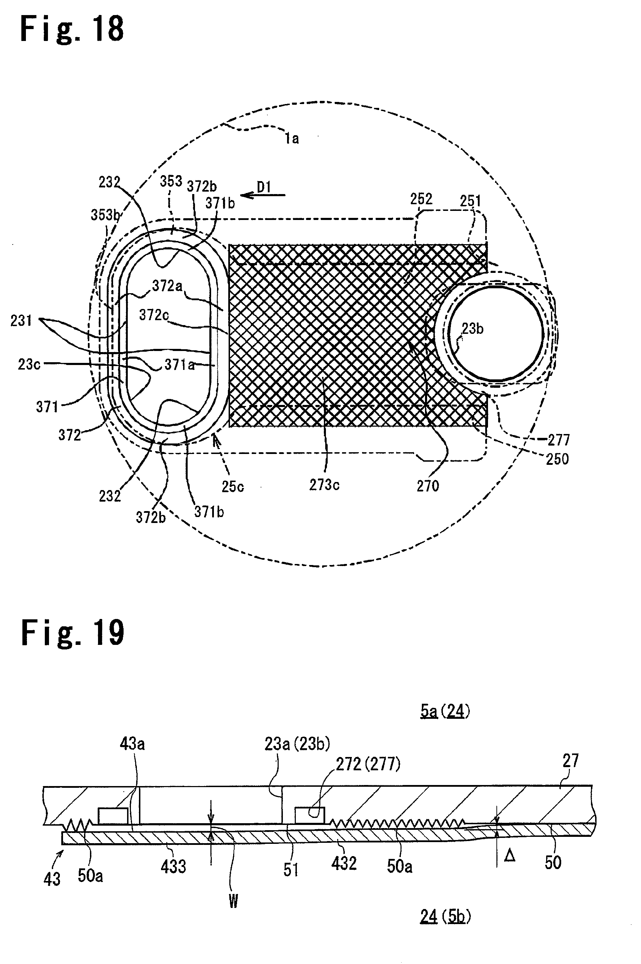

Referring to Fig. 18, in a compressor of the fourth embodiment, the shapes of the suction port 23a, the seal surface 271, the groove 272, the suction reed valve 25a, and the protrusions 273b in the third embodiment are changed. As shown in Fig. 18, a suction port 23c includes two straight portions 231, which extend in a direction orthogonal to the first direction D1 of a suction reed valve 25c, and two arcuate portions 232, which connect the ends of the two straight portions 231. Like the form of the suction port 23c, a seal surface 371 includes two straight portions 371a and two arcuate portions 371 b, which connect the ends of the two straight portions 371a, so as to surround the suction port 23c. A groove 372 includes two straight portions 372a and two arcuate portions 372b, which connect the ends of the two straight portions 372a, so as to surround the seal surface 371. The suction reed valve 25c includes a valve portion 353 having a shape corresponding to the shapes of the suction port 23c and the seal surface 371.

A plurality of protrusions 273c are formed continuously on the reference surface 270 of the valve plate 27 in a region extending from a position facing a boundary position 250 of the fixed portion 251 and the base portion 252 to a rim 372c of the groove 372 surrounding the suction port 23c. That is, the protrusions 273c are formed to face the entire base portion 252. The protrusions 273c are formed to be continuous with the rim 372c along the one of the two straight portions 372a that is located closer to the base portion 252 of the groove 372. As shown in Fig. 18, the protrusions 273c are formed to be separated from the region of the reference surface 270 located at the opposite side of the groove 277 in the same manner as the compressor of the third embodiment. The remaining structure is the same as the compressor of the third embodiment. Thus, same reference characters are given to those components that are the same as the corresponding components of the compressor in the third embodiment. Such components are not described in detail.

In the compressor of the present embodiment, the protrusions 273c are formed facing the entire base portion 252. Thus, in comparison with the compressor of the first embodiment, it is further difficult for an adhesion force to act between the suction reed valve 25c and the seating surface 270. As a result, an opening delay of the suction reed valve 25c subtly occurs. Further, sudden changes in the open amount of the suction reed valve 25c and vibration of the suction reed valve 25c are reduced. In this manner, the compressor of the present embodiment maintains high compression efficiency and, consequently, realizes a high cooling capability. Other advantages are the same as the first and third embodiments.

### Fifth Embodiment

As shown in Fig. 19, in a compressor of a fifth embodiment, a plurality of protrusions 50a are formed entirely around the grooves 272 and 277. The protrusions 50a separate the seal surface 51 and a shutting surface 43a. Fig. 19 shows a state in which the pressure is the same in the compression chamber 24 and the suction chamber 5a. When the pressure of the compression chamber 24 is higher than the pressure of the suction chamber 5a, the shutting surface 43a of a valve portion 433 comes into close contact with the seal surface 51. The remaining structure is the same as the compressors of the first and second embodiments. Thus, same reference characters are given to those components that are the same as the corresponding components of the compressor in the first and second embodiments. Such components are not described in detail.

In the compressor of the present embodiment, the protrusions 50a around the grooves 272 and 277 decrease the area of contact between the valve portion 433 of a reed valve 43 and the reference surface 50. Thus, the suction port 23a and discharge port 23b easily open. Other advantages are the same as the first embodiment and the like.

### Sixth Embodiment

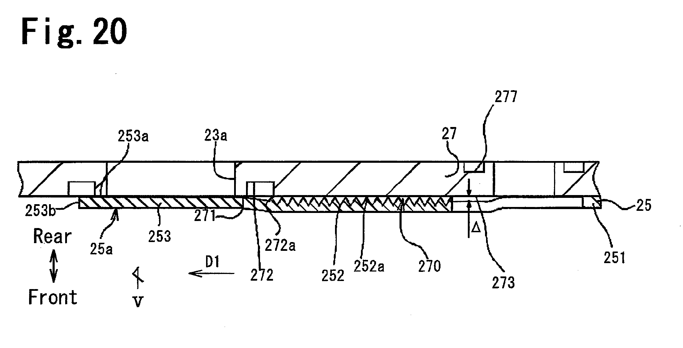

Referring to Fig. 20, in a compressor of a sixth embodiment, in lieu of the protrusions 273b of the third embodiment, a plurality of protrusions 252a are formed on the suction reed valve 25a. The protrusions 252a are formed to extend to a position facing the rim 272a of the groove 272. The remaining structure is the same as the compressor of the third embodiment. Thus, same reference characters are given to those components that are the same as the corresponding components of the compressor in the third embodiment. Such components are not described in detail.

In the compressor of the present embodiment, the protrusions 252a are formed at a location facing the rim 272a of the grooves 272. This makes it difficult for an oil film to form between part of the rim 272a of the groove 272 and the suction reed valve 25a. An oil film is apt to being broken by the protrusions 252a formed at a position facing the groove 272 and the rim 272a of the groove 272. Other advantages are the same as the first embodiment.

In the first to sixth embodiments, the protrusions 273a, 278a, 50a, and 252 are formed through a knurling process but there is no such limitation. The protrusions 273a, 278a, 50a, and 252 may be formed through a blasting process or a laser process.

In the foregoing description, the present invention is described with the first to sixth embodiments. However, the present invention is not limited to the first to sixth embodiments and may be applied without departing from the scope of the invention.

### DESCRIPTION OF REFERENCE CHARACTERS

W: gap; 5a: suction chamber; 5b: discharge chamber; 23a and 23c: suction port; 24: compression chamber; 25a and 25c: suction reed valve; 27: partition wall (valve plate); 29a: discharge reed valve; 43: reed valve; 50, 270, and 275: seating surface; 250: boundary position; 251 and 291: fixed portion; 252 and 292: base portion; 253, 293, and 353: valve portion; 253a and 293a: shutting surface; 271, 276, and 371: seal surface; 273 and 50: reference surface, 272, 277, and 372: groove; 272a and 372c: rim; 273a, 278a, 50a, 252a: plurality of protrusions.

## Claims

1. A compressor comprising:
a partition wall arranged between a compression chamber and a suction chamber or discharge chamber, wherein the partition wall includes a port that communicates the compression chamber with the suction chamber or the discharge chamber; and
a flexible reed valve that can open and close the port, wherein the reed valve includes a fixed portion, which is fixed to the partition wall, a base portion, which extends from the fixed portion along the partition wall and is movable toward and away from the partition wall, and a valve portion, which extends from the base portion further along the partition wall and opens and closes the port;
a seating surface formed on the partition wall that contacts the reed valve when the reed valve closes the port, wherein
the seating surface includes a flat seal surface, which surrounds the port, and a groove, which surrounds the seal surface,
the valve portion includes a flat shutting surface that comes into close contact with the seal surface and closes the port,
the seating surface or the reed valve includes a plurality of protrusions that separate the seal surface and the shutting surface when the pressure of the compression chamber is equal to the pressure of the suction chamber or the discharge chamber, and
the protrusions are formed at locations separated from the seal surface and the shutting surface.

2. The compressor according to claim 1, wherein the protrusions are formed continuously with a rim of the groove on the seating surface.

3. The compressor according to claim 1 or 2, wherein the protrusions are formed in a region facing the base portion on the seating surface.

4. The compressor according to claim 1, wherein the protrusions are formed in at least a region facing a rim of the groove on the reed valve.

5. The compressor according to claim 1 or 4, wherein the protrusions are formed on the base portion.

6. The compressor according to any one of claims 1 to 5, wherein the protrusions are formed through any one of a knurling process, a blasting process, and a laser process.
